# EUROPÄISCHE PATENTSCHRIFT

(11) **EP 1 287 772 B1**
(45) Veröffentlichungstag und Bekanntmachung des Hinweises auf die Patenterteilung: **15.12.2004**
(21) Anmeldenummer: 02018045.1
(22) Anmeldetag: 13.08.2002
(51) Int. Cl.: A47J 31/06, A47J 31/44

(54) **Vorrichtung zur Herstellung eines Brühgetränkes, insbesondere von Kaffee**
Appliance for making beverages, particularly coffee
Appareil pour la préparation de boisson chaudes, en particulier du café

(30) Priorität: 30.08.2001 DE 20114328 U
(43) Veröffentlichungstag der Anmeldung: 05.03.2003
(73) Patentinhaber: MELITTA HAUSHALTSPRODUKTE GmbH & Co. Kommanditgesellschaft, 32427 Minden (DE)
(72) Erfinder: Sachtleben, Andreas, 32427 Minden (DE)
(74) Vertreter: Specht, Peter, Dipl.-Phys.

(56) Entgegenhaltungen:
- EP-A- 0 555 912
- DE-A- 3 526 282
- DE-A- 4 315 213
- FR-A- 2 725 120
- GB-A- 2 056 266

## Beschreibung

Die vorliegende Erfindung betrifft eine Vorrichtung zur Herstellung eines Brühgetränkes, insbesondere von Kaffee, mit einem etwa kegelstumpfartigen Filtergefäß zur Aufnahme eines tütenartigen Filterpapiereinsatzes und einer Wasserzulaufeinrichtung, welche oberhalb des Filtergefäßes angeordnet ist und die dem Filtergefäß gegenüberliegend mit einem eine Vielzahl von Durchlauföffnungen aufweisenden Wasserverteiler ausgestattet ist, wobei eine Durchlauföffnung im Zentrum der Projektionsfläche des Wasserverteilers und des Filtergefäßes liegt.

Vorrichtungen der gattungsgemäßen Art sind überwiegend Bestandteil sogenannter Kaffeemaschinen, wie sie heute in nahezu jedem Haushalt Verwendung finden und aus dem Dokument FR 2 725 120 bekannt sind.

Kaffeemaschinen weisen selbstverständlich darüber hinaus weitere Bauteile und Funktionseinheiten auf, hier sei beispielhaft auf einen Frischwasserbehälter, einen Durchlauferhitzer, eine Aufnahmekanne für das fertige Filtrat und eine Warmhalteplatte verwiesen, auf welch letzerer die Aufnahmekanne für das Filtrat abgestellt ist.

Im Frischwasserbehälter befindliches Wasser wird nach Einschalten einer Kaffeemaschine mit dem Durchlauferhitzer erhitzt und über ein Steigrohr nach oben in eine erfindungsgemäße Vorrichtung gefördert. Vom Steigrohr aus wird das erhitzte Brühwasser in die Wasserzulaufeinrichtung gefördert, von dort aus läuft das Brühwasser durch die Durchlauföffnungen des Wasserverteilers in das darunter befindliche Filtergefäß, in welches zuvor ein tütenartiger Filterpapiereinsatz eingesetzt worden und dieser mit einer vorbestimmten Menge an Kaffeemehl gefüllt worden ist.

Das erhitzte Brühwasser durchdringt das Kaffeemehl und laugt dieses aus und das entstehende Filtrat fließt in die unterhalb des Filtergefäßes bereitgestellte Aufnahmekanne.

Wenngleich eine Kaffeemaschine, deren Funktion vorstehend prinzipiell beschrieben ist, der häufigste Anwendungsfall sein dürfte, kann eine gattungsgemäße Vorrichtung natürlich auch von Hand mit Brühwasser beschickt werden, d. h., der Einsatz einer gattungsgemäßen Vorrichtung ist nicht zwingend in Verbindung mit einer bekannten Kaffeemaschine zu sehen.

Der Zweck einer gattungsgemäßen Vorrichtung ist darin zu sehen, daß durch die Anordnung der Durchlauföffnungen innerhalb des Wasserverteilers Einfluß genommen werden soll auf die Trinkstärke des erzeugten Brühgetränkes.

Wird das Brühwasser ausschließlich durch die zentral angeordnete Durchlauföffnung des Wasserverteiles geführt, hat dies eine starke Verwirbelung des im Filtergefäß befindlichen Kaffeemehls zur Folge, wodurch ein relativ starker Kaffee gebrüht wird.

Wird hingegen das Wasser durch die übrigen, außerhalb des Zentrums liegenden Durchlauföffnungen gerührt, wird ein milderer Kaffee gebrüht.

Bei bekannten Vorrichtungen der gattungsgemäßen Art sind die außerhalb der zentral angeordneten Durchlauföffnung vorgesehenen weiteren Durchlauföffnungen auf Kreisbahnen angeordnet, die konzentrisch zur zentral angeordneten Durchlauföffnung angeordnet sind.

Da ein Filtergefäß aber in dem Bereich, in dem sich das Kaffeemehl befindet, also in seinem unteren bis mittleren Bereich, eine Projektionsfläche aufweist, die nicht mehr kreisförmig ist, kann die beschriebene Anordnung der weiteren Durchlauföffnungen nicht als optimal angesehen werden, da die Gefahr besteht, daß ein Teil des durch diese Durchlauföffnungen auslaufenden Brühwassers nicht unmittelbar auf das Kaffeemehl auftrifft, sondern bereits auf den Seitenwandungsbereich des Filtergefäßes. Eine optimale Ausnutzung des Kaffeemehles ist dadurch nicht möglich.

Der vorliegenden Erfindung liegt die Aufgabe zugrunde, eine Vorrichtung der gattungsgemäßen Art zu schaffen, die unabhängig davon, welche der jeweiligen Durchlauföffnungen für die Herstellung eines Brühgetränkes verwendet wird, stets zu einer optimalen Ausnutzung des verwendeten Aromaträgers führt.

Diese Aufgabe wird erfindungsgemäß dadurch gelöst, daß weitere Durchlauföffnungen auf einer Umfangslinie angeordnet sind, deren Verlauf etwa der Umfangskontur einer Projektionsfläche des Filtergefäß-Innenraumes im unteren bis mittleren Bereich des Filtergefäßes entspricht.

Bei einer erfindungsgemäßen Vorrichtung sind also die außerhalb des Zentrums angeordneten Wasserdurchlauföffnungen so konfiguriert, daß diese weitestgehend der Umfangskontur einer Projektionsfläche des Filtergefäß-Innenraumes im unteren bis mittleren Bereich dieses Filtergefäßes entspricht, so daß im Falle der Nutzung dieser weiteren Durchlauföffnungen das Brühwasser in jedem Falle in den Randbereichen unmittelbar auf das im Filtergefäß befindliche Kaffeemehl oder einen anderen Aromaträger auftrifft. Somit ist eine optimale Ausnutzung des Aromaträgers auch bei Nutzung der äußeren Durchlauföffnungen gewährleistet.

Weitere Merkmale der Erfindung sind Gegenstand von Unteransprüchen.

Ausführungsbeispiele der Erfindung sind in den beigefügten Zeichnungen dargestellt und werden im folgenden näher beschrieben.

Es zeigen:
- Figur 1: eine stark schematisierte Seitenansicht einer erfindungsgemäßen Vorrichtung zur Herstellung eines Brühgetränkes,
- Figur 2: eine stark schematisierte Draufsicht auf die Vorrichtung gemäß Figur 1 mit rechtwinklig zueinander angeordneten Seitenansichten eines Filtergefäßes der Vorrichtung,
- Figur 3: eine der Figur 2 entsprechende Draufsicht auf eine erfindungsgemäße Vorrichtung nach einem weiteren Ausführungsbeispiel der Erfindung.

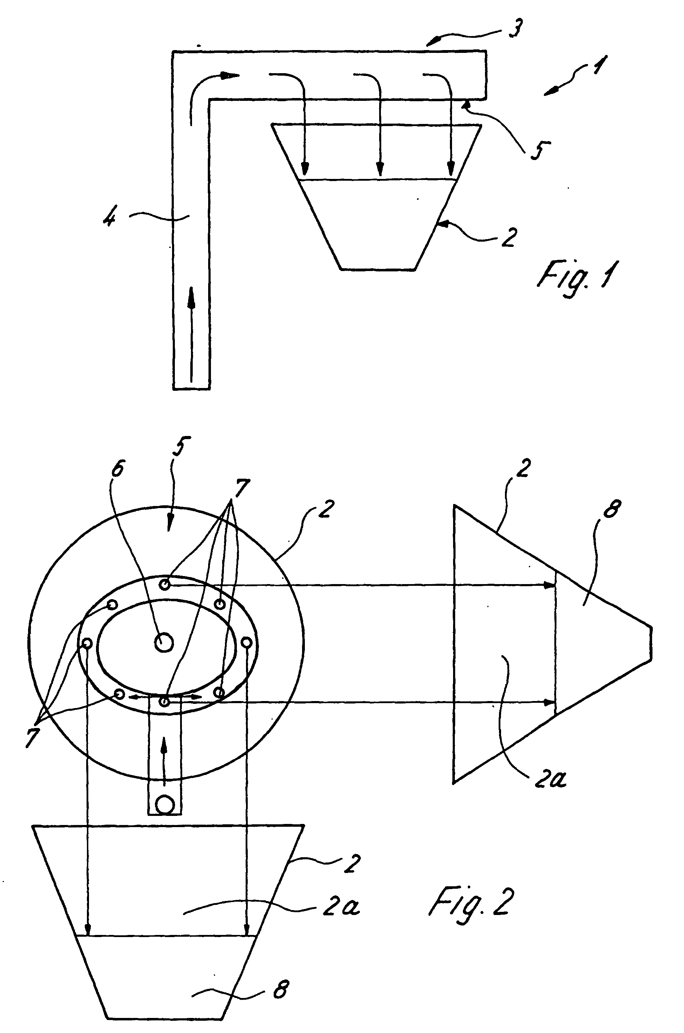

In Figur 1 ist mit dem Bezugszeichen 1 insgesamt eine Vorrichtung zur Herstellung eines Brühgetränkes, insbesondere von Kaffee, bezeichnet, die ein etwa kegelstumpfartiges Filtergefäß 2 und eine Wasserzulaufeinrichtung 3 aufweist. Die Wasserzulaufeinrichtung 3 befindet sich im Betrieb oberhalb des Filtergefäßes 2 und wird beispielsweise durch ein Steigrohr 4 mit Brühwasser beschickt.

Die Wasserzulaufeinrichtung 3 ist auf ihrer dem Filtergefäß 2 zugewandten oder gegenüberliegenden Seite mit einem Wasserverteiler 5 ausgestattet, der eine Vielzahl von Durchlauföffnungen 6, 7 aufweist. Die mit dem Bezugszeichen 6 versehene Durchlauföffnung liegt im Zentrum der Projektionsfläche des Wasserverteilers 5 und des Filtergefäßes 2. Die mit der Bezugszahl 7 bezeichneten Durchflauföffnungen hingegen liegen auf einer Umfangslinie, die etwa der Umfangskontur einer Projektionsfläche des Filtergefäß-Innenraumes 2a im unteren bis mittleren Bereich des Filtergefäßes 2 entspricht. Diese Umfangskontur kann etwa als ellipsenförmig bezeichnet werden, was sich beispielsweise aus der Darstellung gemäß Figur 2 deutlich ergibt.

Die beiden Seitenansichten des Filtergefäßes 2 in der Darstellung nach Figur 2 machen deutlich, daß durch die beschriebene Anordnung der äußeren Durchlauföffnungen 7 Brühwasser stets unmittelbar auf im Filtergefäß befindliches Kaffeemehl 8 treffen kann. Die beiden Seitenansichten des Filtergefäßes 2 machen auch deutlich, daß die lichte Weite des Filtergefäßes - in um 90° versetzt zueinander angeordneten Blickrichtungen gesehen - unterschiedlich groß sind, so daß sich insgesamt die elliptische Umfangskontur ergibt.

Auf die Darstellung von Verschlußmitteln und/oder von speziellen Leitsystemen, die dazu führen, daß entweder nur die zentrale Durchlauföffnung 6 und/oder die äußeren Durchlauföffnungen 7 mit Brühwasser beschickt werden, wird verzichtet. Es ist aber klar, daß derartige Möglichkeiten vorgesehen sein können, um unterschiedliche Trinkstärken des erzeugten Brühgetränkes herstellen zu können.

Beim Ausführungsbeispiel der Erfindung nach Figur 2 ist lediglich ein Kranz von äußeren Durchlauföffnungen 7 vorgesehen.

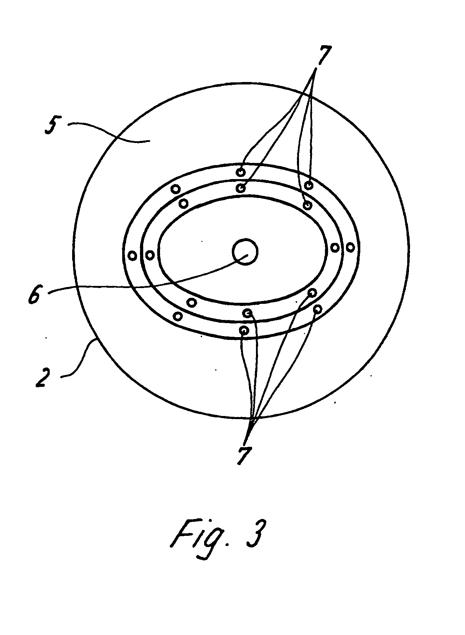

Figur 3 zeigt abweichend hierzu, daß auch zwei parallel zueinander verlaufende Reihen von äußeren Durchlauföffnungen 7 vorgesehen sein können. Beim Ausführungsbeispiel nach Figur 3 sind die auf unterschiedlichen Linien angeordneten äußeren Durchlauföffnungen 7 jeweils einander gegenüberliegend angeordnet. Hier ist die Variation denkbar, daß diese auf unterschiedlichen Linien verlaufenden äußeren Durchlauföffnungen 7 jeweils auch seitlich gegeneinander versetzt sein können.

Selbstverständlich ist es auch denkbar, noch weitere Reihen von äußeren Durchlauföffnungen 7 vorzusehen.

## Patentansprüche

1. Vorrichtung(1) zur Herstellung eines Brühgetränkes, insbesondere von Kaffee, mit einem etwa kegelstumpfartigen Filtergefäßes (2) zur Aufnahme eines tütenartigen Filterpapiereinsatzes und einer Wasserzulaufeinrichtung (3), welche oberhalb des Filtergefäßes (2) angeordnet ist und die im Filtergefäß (2) gegenüberliegend mit einem eine Vielzahl von Durchlauföffnungen(6, 7) aufweisenden Wasserverteiler (5) ausgestattet ist, wobei eine Durchlaufsöffnung (6) im Zentrum der Projektionsfläche des Wasserverteilers (5) und des Filtergefäßes (2) liegt, **dadurch gekennzeichnet, dass** die weiteren Durchlauföffnungen (7) auf einer elliptischen Umfangslinie angeordnet sind, deren Verlauf etwa der Umfangskontur einer Projektionsfläche des Filtergefäß-Innenraumes (2 a) im unteren bis mittleren Bereich des Filtergefäßes (2) entspricht.

2. Vorrichtung nach Anspruch1, **dadurch gekennzeichnet, daß** außerhalb der zentralen Durchlauföffnung (6) zwei oder mehrere Reihen von Durchlauföff-nungen (7) parallel zueinander verlaufend vorgesehen sind.

3. Vorrichtung nach Anspruch 2, **dadurch gekennzeichnet, daß** die außerhalb der zentralen Durchlauföffnung (6) vorgesehenen Durchlauföffnungen (7) jeweils seitlich gegeneinander versetzt angeordnet sind.

4. Vorrichtung nach einem oder mehreren der vorhergehenden Ansprüche, **dadurch gekennzeichnet, daß** Verschlußmittel und/oder Zuleiteinrichtungen vorgesehen sind, durch welche die wahlweise Beschickung der zentralen Durchlauföffnung (6) und/oder der äußeren Durchlauföffnungen (7) möglich ist.

## Claims

1. Apparatus (1) for producing a brewed drink, in particular coffee, having an approximately frusto-conical filter vessel (2) for accommodating a bag-like filter paper insert, and having a water-feed device (3) which is arranged above the filter vessel (2), and located opposite the filter vessel (2) is provided with a water distributor (5) having a multiplicity of through-passage openings (6, 7), one through-passage opening (6) being located in the centre of the projection surface of the water distributor (5) and of the filter vessel (2), **characterized in that** the rest of the through-passage openings (7) are arranged along an elliptical peripheral line which runs along a course, corresponding approximately to the circumferential contour of a projection surface of the filter vessel interior (2a) in the bottom to centre region of the filter vessel (2).

2. Apparatus according to Claim 1, **characterized in that** two or more rows of through-passage openings (7) are provided parallel to one another outside the central through-passage opening (6).

3. Apparatus according to Claim 2, **characterized in that** the through-passage openings (7) provided outside the central through-passage opening (6) are offset laterally in relation to each other in each case.

4. Apparatus according to one or more of the preceding claims, **characterized in that** closure means and/or directing devices are provided, these allowing optional charges of the central through-passage opening (6) and/or of the outer through-passage openings (7).

## Revendications

1. Appareil (1) pour la préparation d'une boisson chaude, en particulier du café, comportant un réceptacle pour filtre (2) sensiblement en forme de cône tronqué, destiné à recevoir un filtre en papier de type cornet, et un dispositif d'admission d'eau (3), qui est agencé au-dessus du réceptacle pour filtre (2) et qui est équipé d'un distributeur d'eau (5), agencé en face du réceptacle pour filtre (2) et muni d'une pluralité d'orifices débouchants (6, 7), un orifice débouchant (6) étant ménagé au centre de la surface de projection du distributeur d'eau (5) et du réceptacle pour filtre (2), **caractérisé en ce que** les autres orifices débouchants (7) sont agencés sur une ligne périphérique elliptique, dont le tracé correspond pratiquement au contour périphérique d'une surface de projection du compartiment intérieur (2a) du réceptacle pour filtre, dans la partie inférieure jusqu'à la partie centrale du réceptacle pour filtre (2).

2. Appareil selon la revendication 1, **caractérisé en ce que**, en dehors de l'orifice débouchant central (6), il est prévu deux ou plusieurs rangées d'orifices débouchants (7) agencées parallèlement les unes aux autres.

3. Appareil selon la revendication 2, **caractérisé en ce que** les orifices débouchants (7), prévus en dehors de l'orifice débouchant central (6), sont agencés en étant décalés latéralement respectivement les uns aux autres.

4. Appareil selon une ou plusieurs des revendications précédentes, **caractérisé en ce qu'**il est prévu des moyens de fermeture et/ou des dispositifs d'admission, par lesquels on peut alimenter au choix l'orifice débouchant central (6) et/ou les orifices débouchants extérieurs (7).
